Europäisches Patentamt

European Patent Office

Office européen des brevets

(19)

(11) Veröffentlichungsnummer : **0 104 263 B1**

## (12) EUROPÄISCHE PATENTSCHRIFT

(45) Veröffentlichungstag der Patentschrift :
**10.02.88**

(51) Int. Cl.⁴ : **B 01 D 23/20**

(21) Anmeldenummer : **82108799.6**

(22) Anmeldetag : **23.09.82**

(54) **Vorrichtung zur Fixierung von Drainagerohren.**

(30) Priorität : **02.09.82 CH 5220/82**

(43) Veröffentlichungstag der Anmeldung :
**04.04.84 Patentblatt 84/14**

(45) Bekanntmachung des Hinweises auf die Patenterteilung : **10.02.88 Patentblatt 88/06**

(84) Benannte Vertragsstaaten :
**DE FR GB IT**

(56) Entgegenhaltungen :
**EP-A- 0 011 319**
**EP-A- 0 019 655**
**EP-A- 0 019 656**
**GB-A- 494 934**
**US-A- 2 401 121**
**US-A- 2 648 439**
**US-A- 4 159 099**

(73) Patentinhaber : **GEBRÜDER SULZER AKTIENGESELL-SCHAFT**
**Zürcherstrasse 9**
**CH-8401 Winterthur (CH)**

(72) Erfinder : **Keller, Ernst**
**Walrütistrasse 119**
**Ch-8404 Winterthur (CH)**

(74) Vertreter : **Dipl.-Ing. H. Marsch Dipl.-Ing. K. Sparing Dipl.-Phys.Dr. W.H. Röhl Patentanwälte**
**Rethelstrasse 123**
**D-4000 Düsseldorf (DE)**

## Beschreibung

Die Erfindung betrifft eine Vorrichtung zur Fixierung von mit Filterdüsen bestückten Drainagerohren auf dem Betonboden eines Filterfeldes, insbesondere für die Wasseraufbereitung, wobei die Vorrichtung für jedes Drainagerohr einen vertikalen Rohrstutzen aufweist, der in den Boden einbetoniert ist und in einen unter dem Boden befindlichen Sammelkanal für das Filtrat führt.

Zur Fixierung von Drainagerohren auf dem Betonboden von Filterfeldern, in denen über dem Boden im allgemeinen ein Bett aus körnigem Filtermaterial vorhanden ist, ist es bekannt, in den zu betonierenden Filterboden Manschetten einzubetonieren und durch diese mit den Drainagerohren verbundene Rohrstutzen zu stecken, wobei zwischen dem Rohrstutzen und der Manschette im allgemeinen eine elastische Dichtung vorhanden ist (EP-A-0 119 658). Der Aufwand für die Herstellung und Montage der Manschetten ist erheblich, so dass einfachere Lösungen angestrebt werden müssen. Es liegt daher nahe, auf das — seit langem bekannte (z. B. US-A-1 633 081) — direkte Einbetonieren der Rohrstutzen zurückzugreifen.

Da die Drainagerohre in derartigen Filterfeldern nahe beieinander liegen, müssen die Rohrstutzen mit relativ engen Toleranzen einen bestimmten Abstand voneinander haben ; dies erfordert einen sehr hohen Aufwand beim Einschalen von direkt einzubetonierenden Rohrstutzen vor dem Betonieren der Decke des Sammelkanals, zumal die eingeschalten Rohrstutzen auch während der Betonierarbeit gegen Verschiebungen und gegen Kippbewegungen gesichert sein müssen.

Aufgabe der Erfindung ist es, den Aufwand für das direkte Einbetonieren der Rohrstutzen entscheidend zu verringern, ohne dass die vertikale Stellung und der vorgegebene Abstand der Rohrstutzen gefährdet werden. Diese Aufgabe wird erfindungsgemäss dadurch gelöst, dass mehrere Rohrstutzen zwei geschlossene Stege durchsetzen und zu einer Rohrbatterie zusammengefasst sind, wobei die Stege einen annähernd der Dicke des Betonbodens entsprechenden Abstand voneinander haben und gleichzeitig als verlorene Schalung für mindestens eine Teilfläche der Betondecke des Sammelkanals dienen.

Die Rohrbatterien lassen sich mit der notwendigen Genauigkeit für den vorgegebenen Abstand und die senkrechte Lage der Achsen ihrer Rohrstutzen in Längen bis zu einigen Metern fabrikmässig vorfertigen, als Ganzes an den Ort der Filteranlage transportieren und auf die bereits gegossenen Seitenwände des Sammelkanals aufsetzen, wobei unter Umständen mehrere Batterieelemente in Längsrichtung des Sammelkanals hintereinander angeordnet werden.

Auf der Baustelle sind daher keine Spezialschalungen für die Rohrstutzen erforderlich ; im Gegenteil kann sogar eine zusätzliche Schalung für die Decke des Sammelkanals unter Umständen ganz oder teilweise entfallen, weil die geschlossenen Stege eine verlorene Schalung für diese Decke bilden.

Vorteilhafterweise werden die Rohrstutzen und die Stege miteinander verschweisst oder verklebt ; sie können beispielsweise aus Kunststoff oder Stahl gefertigt sein.

Ist die Filteranlage mit zwei Phasen — Gas und/oder Flüssigkeit — rückspülbar, so ist es vorteilhaft, wenn die Rohrstutzen unterschiedliche Längen und Durchmesser aufweisen, wobei zweckmässigerweise alternierend aufeinanderfolgend relativ weite lange Rohrstutzen und relativ enge kurze Rohrstutzen abwechseln. Durch die kurzen engen Rohrstutzen, auf denen auch Drainagerohre sitzen, die einen geringeren Durchmesser als diejenigen auf den langen weiten Rohrstutzen haben, wird beim Rückspülen das Rückspülgas in das Filterfeld eingespeist, während die Rückspülflüssigkeit durch die weiten Rohrstutzen und weiten Drainagerohre fliesst.

Die Herstellung des den Boden des Filterfeldes nach oben abschliessenden Glattstriches kann man erheblich erleichtern, wenn der Rand des oberen Stegs in Längsrichtung durch Abkanten verbreitert ist ; dieser Glattstrich muss dann nicht mehr um die einzelnen Rohre herumgelegt, sondern nur noch bis an diese auf einige Zentimeter verbreiterte Kante herangeführt werden.

Im folgenden wird die Erfindung anhand von Ausführungsbeispielen im Zusammenhang mit der Zeichnung näher erläutert.

Fig. 1 zeigt in einer Seitenansicht, die einen Schnitt I-I von Fig. 2 darstellt, einen Ausschnitt aus einer ersten Ausführungsform einer aus Rohrstutzen gebildeten Rohrbatterie ;

Fig. 2 ist der Schnitt II-II von Fig. 1 ;

Fig. 3 gibt in gleicher Darstellung wie Fig. 1 ein Ausführungsbeispiel der Rohrbatterie wieder ;

Fig. 4 ist der Schnitt IV-IV von Fig. 3, während

Fig. 5 und 6 in Ansicht von links die Rohrbatterien von Fig. 1 und 3 in den Betonboden eines Filterfeldes einbetoniert zeigen.

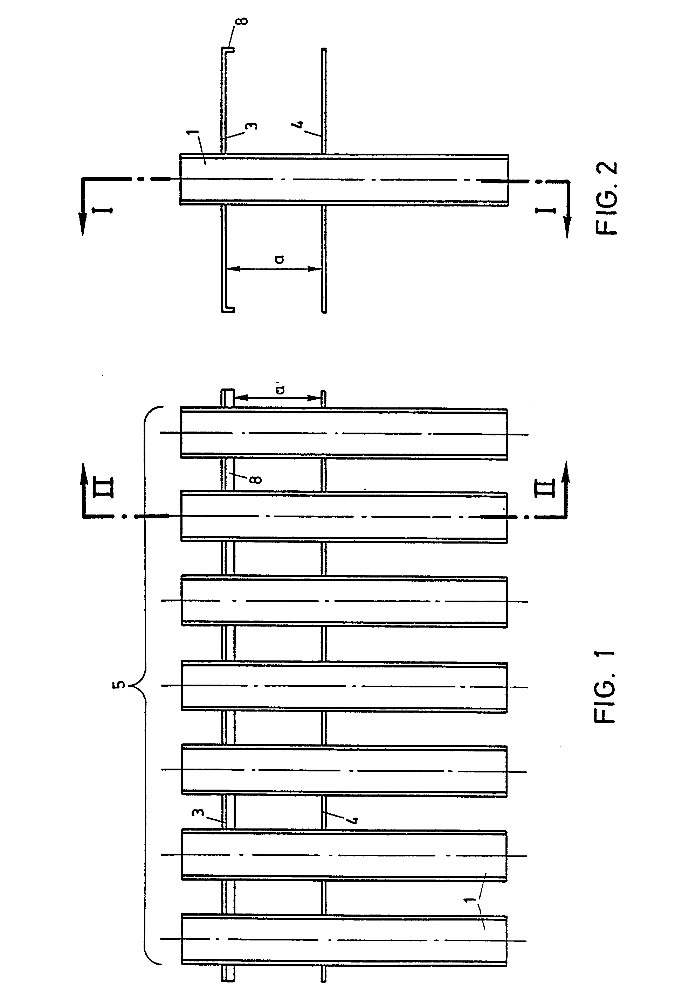

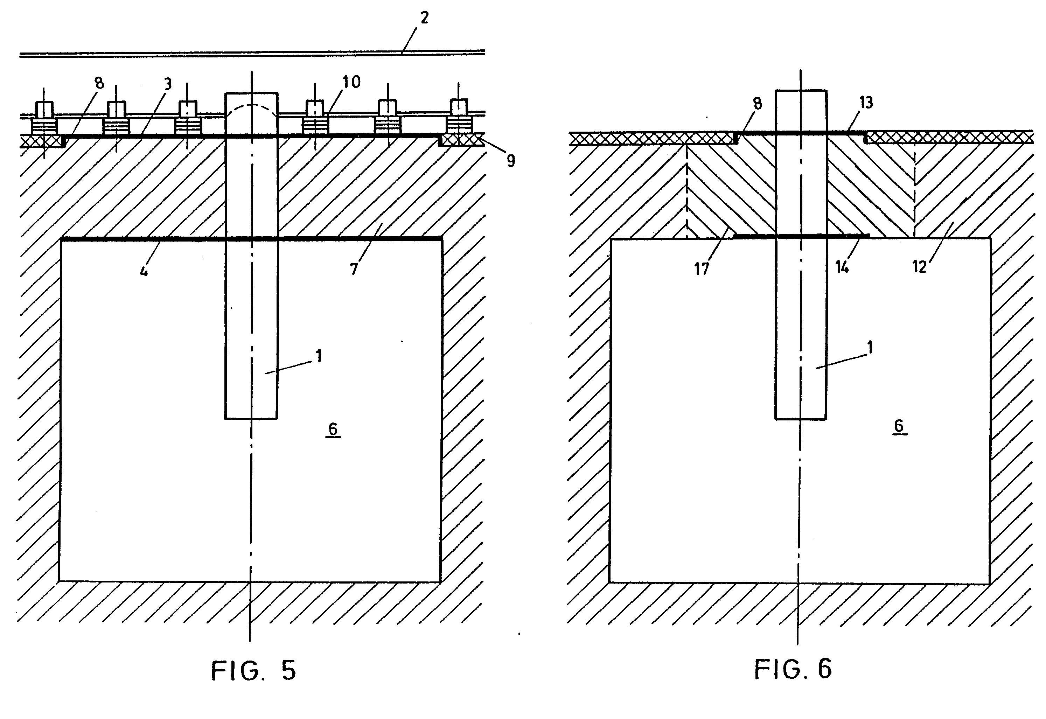

Die Rohrstutzen 1 (Fig. 1), die im ersten Ausführungsbeispiel alle gleich lang sind und den gleichen Durchmesser haben, sind für die Abführung des Filtrats aus den und die Zuführung der Spülmedien zu den Drainagerohren 2 (Fig. 5) bestimmt, die Filterdüsen 10 (Fig. 5) tragen ; die Rohrstutzen 1 münden daher in einen unter dem Betonboden des Filterfeldes liegenden Sammelkanal 6 (Fig. 5). Um eine ordnungsgemässe Montage der auf die Rohrstutzen 1 aufzusteckende Drainagerohre 2 sicherzustellen, sind die Rohrstutzen 1 in einem vorgegebenen Abstand mit vertikaler Achse aufgereiht und durch einen geschlossenen oberen Steg 3 und einen geschlossenen unteren Steg 4 relativ zueinander fixiert. Die Verbindung der Rohrstutzen 1 mit dem Steg 3 und 4 erfolgt dabei vorteilhafterweise durch Schweissen oder Kleben.

Die die Rohrstutzen 1 zu einer Rohrbatterie 5 zusammenfassenden Stege 3 und 4 haben ihrerseits einen vertikalen Abstand a, der — wie Fig. 5 zeigt — der Dicke des zu betonierenden Betonbodens entspricht.

Die Breite der Stege 3 und 4 der ersten Ausführungsform entspricht, wie Fig. 2 und 5 deutlich machen, der Breite des Sammelkanals 6. Die Stege 3 und 4 bilden daher eine verlorene Schalung, mit der die einen Teil des Betonbodens darstellende Decke 7 des Sammelkanals 6 ohne zusätzliche Schalungselemente gefertigt werden kann.

Der obere Steg 3 ist in Längsrichtung abgekantet, so dass sich ein verbreiterter Rand 8 von einigen Zentimetern, beispielsweise 2-4 cm, Höhe ergibt. Durch diesen Rand 8 wird die Herstellung des den Filterboden nach oben abschliessenden Glattstrichs 9 (Fig. 5) sehr erleichtert, da der Glattstrich 9 nur bis an diesen gerade verlaufenden Rand herangeführt werden muss.

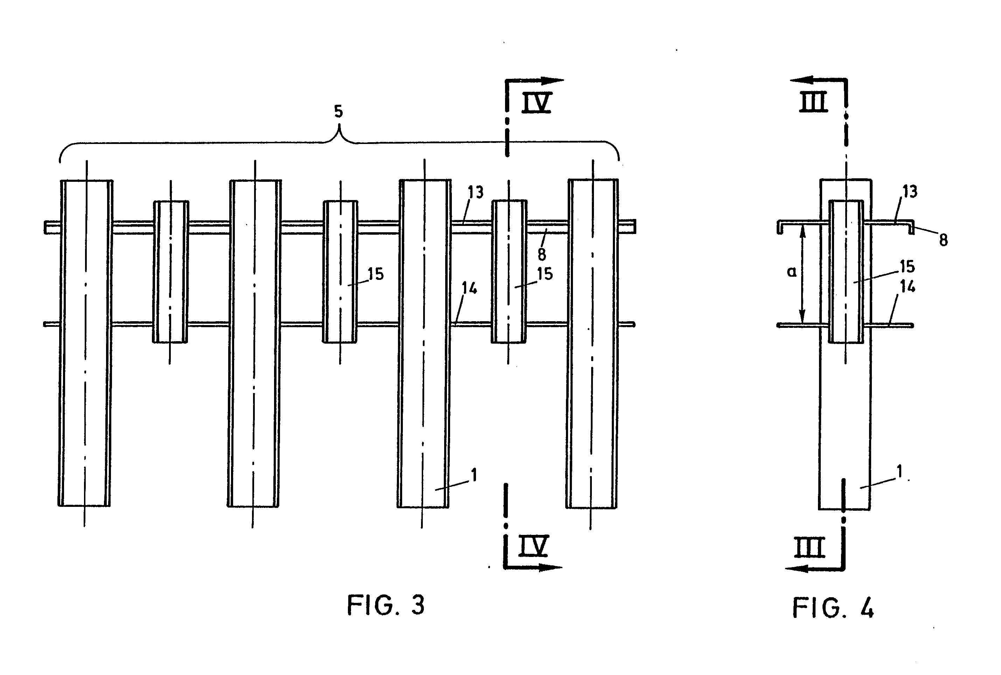

Die Rohrbatterie 5 nach den Fig. 3 und 4 unterscheidet sich von der ersten Ausführungsform zum einen dadurch, dass bei ihr lange weite Rohrstutzen 1 mit kurzen engen Rohrstutzen 15 abwechseln, auf die — was nicht ausdrücklich dargestellt ist — auch Drainagerohre mit geringerem Durchmesser gesteckt werden. Wie bereits beschrieben, werden den Rohrstutzen 1 und 15 und damit den mit ihnen verbundenen Drainagerohren bei Zweiphasen-Rückspülungen unterschiedliche Rückspülmedien zugeführt.

Weiterhin sind beim zweiten Beispiel wie Fig. 4 erkennen lässt, die Stege 13 und 14 relativ schmal ausgeführt, was die Handhabung und den Transport der Rohrbatterien 5 erleichtert.

Allerdings decken die Stege 13 und 14 dann nicht mehr, wie aus Fig. 6 ersichtlich, die ganze Breite des Sammelkanals 6 ab. Der Betonboden 12 und die Decke 17 des Sammelkanals können daher bei dieser Ausführungsform in ein oder zwei Arbeitsgängen gegossen werden, wobei für das Betonieren der Decke 17 im Sammelkanal 6 eine nicht dargestellte Schalung angebracht wird, auf der der Steg 14 während des Betonierens der Decke 17 fixiert ist.

Die Hinterfüllung des abgekanteten Randes am oberen Steg 3 bzw. 13 wird in beiden Fällen beispielsweise durch eine Vibrationsverdichtung beim Betonieren des Bodens 12 bzw. der Decke 7 oder 17 sichergestellt.

## Patentansprüche

1. Vorrichtung zur Fixierung von mit Filterdüsen bestückten Drainagerohren auf dem Betonboden eines Filterfeldes, insbesondere für die Wasseraufbereitung, wobei die Vorrichtung für jedes Drainagerohr einen vertikalen Rohrstutzen aufweist, der in den Boden einbetoniert ist und in einen unter dem Boden befindlichen Sammelkanal für das Filtrat führt, dadurch gekennzeichnet, dass mehrere Rohrstutzen (1, 15) zwei geschlossene Stege (3, 4 ; 13, 14) durchsetzen und zu einer Rohrbatterie (5) zusammengefasst sind, wobei die Stege (3, 4 ; 13, 14) einen annähernd der Dicke des Betonbodens (12) entsprechenden Abstand (a) voneinander haben und gleichzeitig als verlorene Schalung für mindestens eine Teilfläche der Betondecke (7) des Sammelkanals (6) dienen.

2. Vorrichtung nach Anspruch 1, dadurch gekennzeichnet, dass die Rohrstutzen (1, 15) unterschiedliche Längen und Durchmesser aufweisen.

3. Vorrichtung nach Anspruch 2, dadurch gekennzeichnet, dass alternierend aufeinanderfolgend relativ weite lange Rohrstutzen (1) und relativ enge kurze Rohrstutzen (15) abwechseln.

4. Vorrichtung nach Anspruch 1, dadurch gekennzeichnet, dass der Rand (8) in Längsrichtung des oberen Stegs (3, 13) durch Abkanten verbreitert ist.

5. Vorrichtung nach Anspruch 1, dadurch gekennzeichnet, dass die Rohrstutzen (1, 15) mit den Stegen (3, 4 ; 13, 14) verschweisst oder verklebt sind.

## Claims

1. A device for fixing drainage pipes fitted with filter nozzles to the concrete floor of a filter bed, more particularly for water treatment, the device having for each drainage pipe a vertical pipe stub which is concreted into the floor and which leads into a filtrate collecting duct under the floor, characterised in that a plurality of pipe stubs (1, 15) are passed through two closed yokes (3, 4 ; 13, 14) and are combined to make a pipe array (5), the yokes (3, 4 ; 13, 14) being mutually spaced by a distance (a) approximately corresponding to the thickness of the concrete floor (12) and serving simultaneously as permanent formwork for at least part of the area of the concrete roof (7) of the collecting duct (6).

2. A device as claimed in claim 1, characterised in that the pipe stubs (1, 15) are of different lengths and diameters.

3. A device as claimed in claim 2, characterised in that relatively wide long pipe stubs (1) alternate with relatively narrow short pipe stubs (15).

4. A device as claimed in claim 1, characterised in that the long edges (8) of the upper yoke (3, 13) are widened by flanging.

5. A device as claimed in claim 1, characterised in that the pipe stubs (1, 15) are welded or bonded to the yokes (3, 4 ; 13, 14).

## Revendications

1. Dispositif de fixation de tuyaux de drainage équipé de buses filtrantes, sur le plancher en béton d'une zone de filtration, notamment pour le traitement des eaux, ce dispositif comportant pour chaque tuyau de drainage une tubulure verticale qui est noyée dans le béton du plancher et qui conduit à un collecteur du filtrat situé sous le plancher, caractérisé en ce que plusieurs tubulures (1, 15) traversent deux traverses (3, 4 ; 13, 14) fermées et sont réunies pour former une batterie de tuyaux (5), les traverses (3, 4 ; 13, 14) étant espacées d'une distance (a) correspondant approximativement à l'épaisseur du plancher en béton (12) et servant en même temps de coffrage perdu pour au moins une partie de la couverture en béton (7) du collecteur (6).

2. Dispositif selon la revendication 1, caractérisé en ce que les tubulures (1, 15) ont des longueurs et des diamètres différents.

3. Dispositif selon la revendication 2, caractérisé en ce que des tubulures (1) relativement larges et longues alternent avec des tubulures (15) relativement étroites et courtes.

4. Dispositif selon la revendication 1, caractérisé en ce que le bord (8) dans la direction longitudinale de la traverse supérieure (3, 13) est élargi par pliage.

5. Dispositif selon la revendication 1, caractérisé en ce que les tubulures (1, 15) sont soudées ou collées avec les traverses (3, 4 ; 13, 14).

FIG. 1

FIG. 2

0 104 263

**FIG. 3**

**FIG. 4**

FIG. 5

FIG. 6

0 104 263